Europäisches Patentamt

European Patent Office

Office européen des brevets

(11) Veröffentlichungsnummer: **0 463 361 A1**

# EUROPÄISCHE PATENTANMELDUNG

(21) Anmeldenummer: **91108245.1**

(22) Anmeldetag: **22.05.91**

(51) Int. Cl.5: **F01N 7/08**, F01N 3/02

(30) Priorität: **27.06.90 DE 4020357**

(43) Veröffentlichungstag der Anmeldung:
**02.01.92 Patentblatt 92/01**

(84) Benannte Vertragsstaaten:
**AT BE CH DE DK ES FR GB GR IT LI LU NL SE**

(71) Anmelder: **MAN TECHNOLOGIE
AKTIENGESELLSCHAFT
Dachauer Strasse 667 Postfach 50 04 26
W-8000 München 50(DE)**

(72) Erfinder: **Kreutmair, Josef, Dipl.-Ing.
Tegernbacher Strasse 25
W-8068 Pfaffenhofen(DE)**
Erfinder: **Simpkin, David Michael
Weidenweg 7
W-8066 Günding(DE)**
Erfinder: **Zöbl, Alfred
Bad Kissngen-Strasse 86
W 8000 München 80(DE)**

(54) **Abgasführungssystem.**

(57) Bei einem Abgasführungssystem (10) mit einer Einrichtung (13, 14) zur Reinigung der Abgase wird die Anordnung einer Kühleinrichtung (16) für die gereinigten Abgase (17) vorgeschlagen. Die Kühleinrichtung wird in der Abgasleitung (12) in einem geeigneten Bereich in Strömungsrichtung nach der Reinigungsvorrichtung (13, 14) angeordnet. Als Kühleinrichtung kann ein Wärmetauscher (16) oder eine Mischeinrichtung vorgesehen werden, mit der kühle Umgebungsluft zu den heißen Abgasen zuführbar ist. Damit werden Schäden aufgrund von Überhitzungen, insbesondere im Austrittsbereich der Abgase vermieden.

Fig.1

Die Erfindung bezieht sich auf ein Abgasführungssystem, das eine Abgasleitung und eine in der Abgasleitung zwischengeschaltete, die Abgastemperatur anhebende Vorrichtung zur Reinigung der Abgase enthält.

Bei zahlreichen bekannten Abgasreinigungssystemen (wie Nachverbrennungsmethoden, Katalysatoren, Partikelfilter etc.), werden die Abgase zur Erlangung der erforderlichen Reaktion, wie Oxidation, in ihrer Temperatur angehoben. Die Abführung von derartig heißen Abgasen und insbesondere der Austritt der Abgase aus dem Abgasführungssystem stellen eine Gefahr dar, die zu Personen- und Schabeschädigung führen kann.

Der Erfindung liegt die Aufgabe zugrunde, ein Abgasführungssystem der eingangs genannten Art zu schaffen, bei dem keine Gefährdung durch heiße Abgase besteht.

Die Aufgabe wird erfindungsgemäß durch die Merkmale des Anspruches 1 gelöst.

Bei der erfindungsgemäßen Lösung wird die überschüssige Wärmeenergie nach erfolgter Reaktion bzw. Reinigung der Abgase abgezogen, so daß insbesondere bei einer Überhitzung der Abgase im Reinigungsprozeß von vornherein eine Gefährdung, die zu Personen- oder Sachbeschädigungen führen könnte, vermieden wird. Dabei ist es - unter Umständen mit einem verhältnismäßig geringem Mehraufwand - möglich, die Abgastemperaturen soweit zu reduzieren, daß außerdem auf Wärmeisolierungen von benachbarten Bauteilen verzichtet werden kann.

Gemäß einer Ausgestaltung der Erfindung ist in der Abgasleitung in Strömungsrichtung nach der Abgasreinigungsvorrichtung ein Wärmetauscher vorgesehen, dessen Kühlmedium die Umgebungsluft, gesondert durchgeführte Druckluft oder eine Flüssigkeit sein kann. Die letztere Variante wird man vorziehen, wenn die Wärmeenergie anderweitig nutzbar gemacht werden kann bzw. soll.

Die Funktion eines Wärmetauschers läßt sich alternativ durch Ausbildung des Abgasrohres mit vergrößerter Kontaktfläche zwischen Abgas und Kühlmittel vollziehen.

Eine wirkungsvolle Variante zur Abkühlung der Abgase wird durch Verdünnung der heißen Abgase mit Kühlluft, insbesondere Umgebungsluft erreicht.

Die Zuführung der Kühlluft in das Abgasrohr kann zwangsweise mittels Gebläse oder Verdichter, z. B. aus einem vorhandenen Druckluftnetz oder aus der Ladeluft für Verbrennungsmaschinen erfolgen. Derartige Anlagen lassen sich beispielsweise temperaturgesteuert betreiben.

Gemäß einer weiteren Ausgestaltung der Erfindung ist das Abgasrohr mit aerodynamisch wirkenden Einbauten ausgebildet, die unter Erzeugung einer Druckdifferenz und unter Ausnutzung der Abgasströmung die Zuführung von Umgebungsluft in das Abgasrohr ermöglichen. Dieses ist eine fertigungstechnisch einfache Lösung, bei der das Abgasrohr mit Umgebungsluft-Einlaßöffnungen versehen wird, die so ausgestaltet sind, daß das strömende Abgas die Umgebungsluft durch die Öffnungen ansaugt.

Die Kühlung der Abgase kann in jedem Bereich des Abgasführungssystemes erfolgen, in dem die gereinigten Abgase strömen. Die Anordnung wird sich nach der jeweiligen Anwendung, dem Raumangebot und der zu erzielenden Wirkung richten. Der Kühlbereich kann unmittelbar der Bereich hinter der Reinigungseinrichtung sein, sofern hier die Reaktionen der Abgaskomponenten abgeschlossen sind. Bei knappem Raumangebot z. B. empfiehlt sich eine Anordnung der Kühleinrichtung am Austrittsende der Abgasleitung.

Die Erfindung wird im folgenden anhand von in der Zeichnung schematisch dargestellten Ausführungsbeispielen näher beschrieben. Es zeigen:

| Fig. 1 | ein Abgasführungssystem mit einem ersten Ausführungsbeispiel einer Kühleinrichtung, |
| Fig. 2 bis 4 | je ein weiteres Ausführungsbeispiel und |
| Fig. 5a, b | einen Längsschnitt bzw. einen Querschnitt eines weiteren Ausführungsbeispieles. |

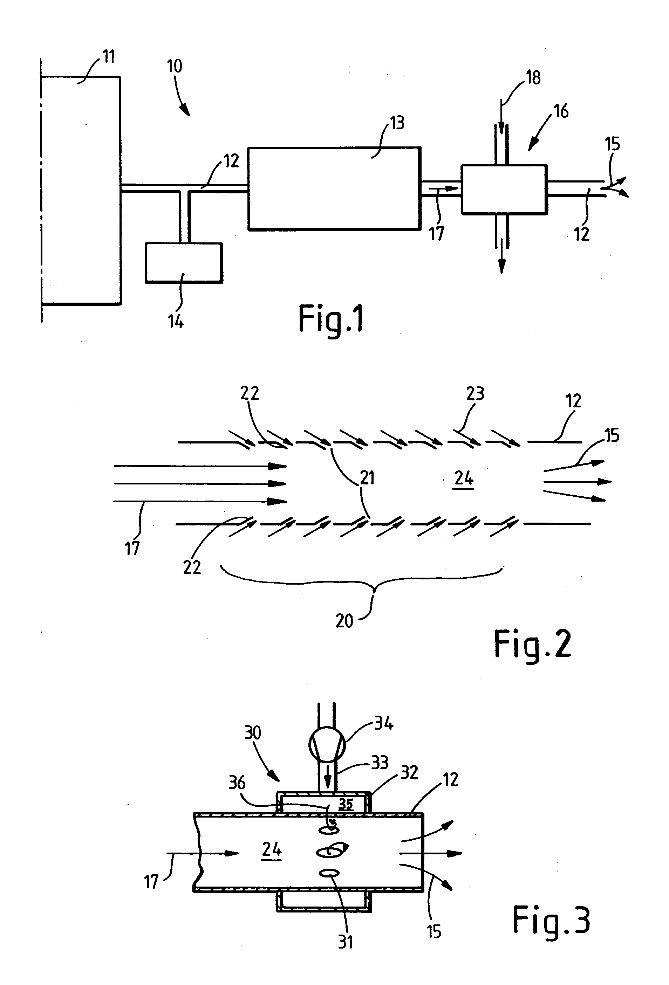

In Fig. 1 ist ein Abgasführungssystem 10 eines Verbrennungsmotors 11 gezeigt, das eine Abgasleitung 12 enthält, in der ein Partikelfilter 13 zwischengeschaltet ist. Dem Partikelfilter 13 ist ein Regenerierbrenner 14 zugeordnet, dessen Heißgase in die Abgasleitung 12 in Abgasströmungsrichtung vor dem Partikelfilter eingeleitet werden.

Bei einem Abgasreinigungssystem dieser Art oder bei anderweitigen Abgasreinigungsmethoden, beispielsweise mittels Nachverbrennung, Katalysatoren und dergleichen, kann es vorkommen, daß bei Ausfall von Regelungsprozessen die Abgase 17 überhitzt werden. Das kann zur Folge haben, daß Personen und Bauteile oder Gegenstände, die sich in der Umgebung und insbesondere am Ausgang der Abgasleitung 12 befinden, durch die heißen Abgase verletzt bzw. zerstört werden. Um diese Gefahren nicht auftreten zu lassen, ist in der Abgasleitung 12 in Strömungsrichtung nach der Reinigungsvorrichtung 13, 14 eine Kühleinrichtung 16 vorgesehen.

In Fig. 1 besteht die Kühleinrichtung 16 in einem Wärmetauscher beliebiger konventioneller Bauart, bei dem die Wärmeenergie aus den heißen Abgasen 17 über nicht näher dargestellte Wärmetauscherwände an ein Kühlmedium 18 abgegeben wird. In dieser Ausführung kann die abgenommene Wärmeenergie über das gasförmige oder flüssige Kühlmedium 18 anderweitig genutzt werden.

Wenn eine Nutzung der Wärmeenergie nicht beabsichtigt oder nicht möglich ist, empfiehlt es sich, die Temperatur der heißen Abgase 17 direkt durch Zumischen von Kühlluft herabzusetzen. Dieses kann in unterschiedlicher weise geschehen. In den Fig. 2 bis 5 sind einige Beispiele dazu gezeigt.

In Fig. 2 ist eine Ausführung dargestellt, bei der die Kühleinrichtung 20 in zahlreichen Durchbrüchen 21 im Abgasrohr 12 besteht. Die Durchbrüche 21 sind beispielsweise mit Leitblechen 22 so ausgestaltet, daß sich aufgrund der Abgasströmung eine Druckdifferenz zu beiden Seiten der Abgasrohrwand ergibt, durch die Umgebungsluft 23 in das Abgasrohrinnere 24 eingesaugt wird. Die heißen Abgase 17 vermischen sich mit der einströmenden Luft 23 und treten als verdünntes und abgekühltes Abgas 15 aus dem Abgassystem heraus.

Zur Erzeugung der für die Einführung von Kühlluft in das Abgasrohr erforderlichen Druckdifferenz können auch Gebläse oder Verdichter verwendet werden.

Fig. 3 zeigt ein Ausführungsbeispiel hierzu, bei dem die Kühleinrichtung 30 in Durchbrüchen 31 am Abgasrohr 12 und einem diesen Bereich des Abgasrohres 12 umgebenden Gehäuse 32 besteht, in das ein mit einem Gebläse 34 versehenes Kühlluftzufuhrrohr 33 mündet. Über das Gebläse 34 wird im Ringraum 35 zwischen dem Gehäuse 32 und der Abgasrohrwandung ein geringfügiger Überdruck erzeugt, der ausreicht, um die Kühlluft 36 über die Durchbrüche 31 in den Abgasrohrinnenraum 24 einströmen zu lassen. Diese Kühleinrichtung 30 ist gemäß Fig. 3 nahe am Abgasaustrittsende des Abgasrohres 12 angeordnet. Die Einführung der Kühlluft 36 und deren Vermischung mit den Abgasen 17 kann mit Leitblechen und/oder diffusorartiger Erweiterung der Abgasrohrmündung unterstützt werden.

Es gibt ferner zahlreiche Möglichkeiten, die Varianten nach den Fig. 1, 2 und 3 zu verändern bzw. an den jeweiligen Anwendungsfall anzupassen.

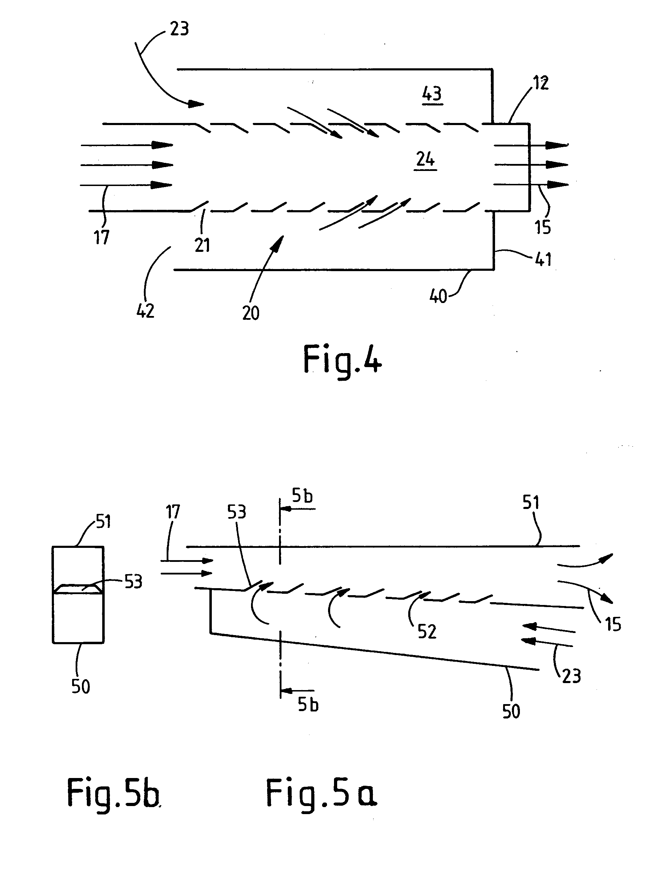

In Fig. 4 ist beispielsweise eine Ausführung gemäß Fig. 2 gezeigt, bei der die Kühleinrichtung 20 am Ausgangsende der Abgasleitung 12 angeordnet und mit einem Schutzgehäuse 40 versehen ist, dessen abgasaustrittsseitige Stirnseite 41 geschlossen ist. Die Kühlluft 23 aus der Umgebung tritt an der gegenüberliegenden Stirnseite 42 in den vom Gehäuse 40 gebildeten Ringraum 43 und von dort durch die Durchbrüche 21 in das Abgasrohrinnere 24 ein.

Mit dem Gehäuse 40, 41 wird verhindert, daß die aus der Abgasleitung 12 ausströmenden warmen und unter Umständen noch relativen heißen Abgase 15 zum Kühlbereich 20 geführt werden. Diese Ausführung hat den Vorteil, daß zum einen die angrenzenden Bauteile nicht unnötig überhitzt werden und zum anderen eine bessere Kühlwirkung der Abgase 17 erreicht wird.

Ist es dagegen lediglich notwendig, daß die Abgasleitung im Verlegebereich dicht ist, so wird Abhilfe geschaffen durch ein Gehäuse 40, dessen abgasanströmseitige Stirnseite 42 geschlossen ist, während die abströmseitige Stirnseite offen ist, so daß das Abgasführungssystem bis zur Mündung hin aus Sicherheitsgründen geschlossen ist.

In Fig. 5a ist ein Gehäuse 50 dieser Art gezeigt, das zudem nur einen Mantelteil des Abgasrohres 51 einschließt. Die Durchbrüche 52 für die Kühlluft 23 befinden sich nur in sich nur in diesem Mantelteilbereich. Wie im Querschnitt in Fig. 5b gezeigt ist, handelt es sich bei diesem Ausführungsbeispiel um eine Abgasleitung mit rechteckigem bzw. quadratischem Querschnitt, der sich diffusorartig zur Mündung hin vergrößert. Die Durchbrüche 52 sind längliche Öffnungen, die jeweils ein Leitblech 53 aufweisen.

Die Anordnung der Kühleinrichtung 16, 20, 30 wird je nach Raumangebot und Anwendung zu wählen sein. Wenn möglich, wird man eine Anordnung nahe der Reinigungsvorrichtung wählen, um das gesamte nachfolgende Abgasführungungssystem vor höheren Temperaturen und insbesondere Überhitzungen zu bewahren. Ist die Abgasleitung an einer Wand oder wie beim Fahrzeug am Fahrzeugboden angebracht, dann bietet sich beispielsweise eine Kühleinrichtung entsprechend Fig. 5a, b an, die nur eine Hälfte oder einen Teilbereich des Abgasleitungsumfanges beansprucht. Auf die Weise wird die Kühleinrichtung am freien Teil der Abgasleitung nahe der Reinigungsvorrichtung vorgesehen.

**Patentansprüche**

1. Abgasführungssystem, enthaltend eine Abgasleitung und eine in der Abgasleitung zwischengeschaltete Vorrichtung zur Reinigung der Abgase, dadurch gekennzeichnet, daß in einem Bereich der Abgasleitung (12) in Strömungsrichtung nach der Reinigungsvorrichtung (13, 14) eine Einrichtung (16, 20, 30) zur Kühlung der Abgase (17) vorgesehen ist.

2. System nach Anspruch 1, dadurch gekennzeichnet, daß die Kühleinrichtung ein Wärmetauscher (16) ist.

3. System nach Anspruch 1, dadurch gekennzeichnet, daß als Kühleinrichtung eine Gasmischeinrichtung (20, 30) vorgesehen ist, mit der die heißen Abgase (17) mit Kühlluft (23, 26) vermischbar sind.

4. System nach Anspruch 3, dadurch gekennzeichnet, daß die Mischeinrichtung (20) aus Durchbrüchen (21) in der Abgasleitung (12, 51) besteht, durch die Umgebungsluft (23) als Kühlluft in die Abgasleitung (12, 51) einsaugbar ist.

5. System nach Anspruch 3 oder 4, dadurch gekennzeichnet, daß der Bereich der Abgasleitung (12, 51) mit den Durchbrüchen (21, 52) mit einem einseitig offenen Schutzgehäuse (40, 50) umgeben ist.

6. System nach einem der vorhergehenden Ansprüche, dadurch gekennzeichnet, daß ein Gebläse oder Verdichter (34) vorgesehen ist, mit dem die Kühlluft (36) zwangsweise in die Abgasleitung (12) einblasbar ist.

Fig.1

Fig.2

Fig.3

Fig.4

Fig.5b    Fig.5a

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | DE-A-3 522 431   (DAIMLER-BENZ) <br> * Spalte 2, Zeile 34 - Spalte 3, Zeile 47; Abbildung * <br> — — — | 1,2,3-5 | F 01 N 7/08 <br> F 01 N 3/02 |
| Y | GB-A-4 293 29   (JEE) <br> * Seite 1, Zeile 70 - Zeile 105; Abbildungen * <br> — — — | 3-5 | |
| X | GB-A-2 161 397   (BERRY) <br> * Seite 2, Zeile 118 - Seite 3, Zeile 27; Abbildung 3 * <br> — — — | 1,6 | |
| X | DE-A-3 821 138   (MAN) <br> * Spalte 5, Zeile 25 - Zeile 45; Abbildung 2 * <br> — — — | 1,2 | |
| A | FR-A-1 438 603   (NICAISE) <br> — — — — — | | |

|  | RECHERCHIERTE SACHGEBIETE (Int. Cl.5) |
|---|---|
| | F 01 N |

Der vorliegende Recherchenbericht wurde für alle Patentansprüche erstellt

| Recherchenort | Abschlußdatum der Recherche | Prüfer |
|---|---|---|
| Den Haag | 23 September 91 | SIDERIS M. |